# EUROPEAN PATENT SPECIFICATION

(11) **EP 1 738 712 B1**
(45) Date of publication and mention of the grant of the patent: **21.01.2009**
(21) Application number: 06115550.3
(22) Date of filing: 15.06.2006
(51) Int. Cl.: A61C 1/00

(54) **Auxiliary apparatus for dental treatments**
Zusatzgerät zur zahnärztlichen Behandlung
Appareil auxiliaire pour traitements dentaires

(30) Priority: 30.06.2005 IT BO20050439
(43) Date of publication of application: 03.01.2007
(73) Proprietor: CASTELLINI S.p.A., I-40013 Castel Maggiore (Bologna) (IT)
(72) Inventor: CASTELLINI, Franco, 40124, BOLOGNA (IT)
(74) Representative: Lanzoni, Luciano

(56) References cited:
- WO-A-98/27886
- US-A- 5 689 159
- US-A- 5 898 112
- US-A- 5 980 248

## Description

This invention relates to an auxiliary apparatus for dental treatments where the operating parameters of the handpieces applied can be displayed.

It is well known that dental surgeries use auxiliary apparatus (also referred to as "stand-alone" apparatus because it is separate from the traditional dental unit) to administer dental treatment on patients using specific handpieces that may supplement or be used instead of the handpieces and equipment located on the dental unit.

These specific treatments, for example involving endodontic or implant operations (besides dental hygiene and/or whitening treatments) are performed using the auxiliary apparatus, which essentially comprises:
- a main body constituting the power unit that drives the handpieces in turn connected to the unit through a tube;
- means for activating the handpiece and adjusting its operating parameters, these means being located on a surface of the main body and being controlled by
- a microprocessor unit for controlling the main and auxiliary functions of the handpiece applied to the apparatus.

The microprocessor may, in complex configurations, be programmed and set for a plurality of handpieces and treatments according to operating needs.

One of the needs which current apparatus of this kind is unable to satisfy, however, is that of monitoring the actual "work" done by the handpieces during use (for example, by handpiece burs for implant applications or by dental filing tools for endodontic operations) allowing the dental surgeon to view the physiological and structural parameters of the parts concerned immediately: indicating, for example, how compact a tooth being treated is, whether the tool on the handpiece is working on soft tissue, etc.

These parameters are very important because they enable the dental surgeon to make an immediate decision as to the therapy to apply next or the implant to use on the patient.

At present, data regarding operating torque actually applied to a handpiece can be recorded on this stand-alone apparatus to which the handpieces used for these treatments can be connected.

In this case, the stand-alone apparatus has a unit that records the torque used during treatment and saves the information to a smart card. The information recorded can then be transferred to another unit or PC capable of displaying or printing it.

The information obtained in this way, however, is used for statistical purposes only, since the treatment and subsequent therapies have already been applied on the basis of what the surgeon saw at the time of the treatment and his/her own experience.

Document WO9827886 discloses an auxiliary apparatus including a tool for screwing in a surgical implant or for cutting a thread in human bone tissue with thread top. Detection members transmit signals, dependent on the torque of the tool, to display members which comprise a computer unit with screen.

The present invention therefore has for an aim to overcome the above mentioned drawbacks by providing an auxiliary apparatus for dental treatments which offers the possibility of displaying the torque applied to the handpieces during operation.

In accordance with the invention, this aim is achieved by an auxiliary apparatus for dental treatments in accordance with appended claim 1.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows an auxiliary apparatus for dental treatments according to the present invention in a schematic perspective view with some parts cut away to better illustrate others;
- Figure 2 is a diagram illustrating some of the parts of the apparatus of Figure 1.

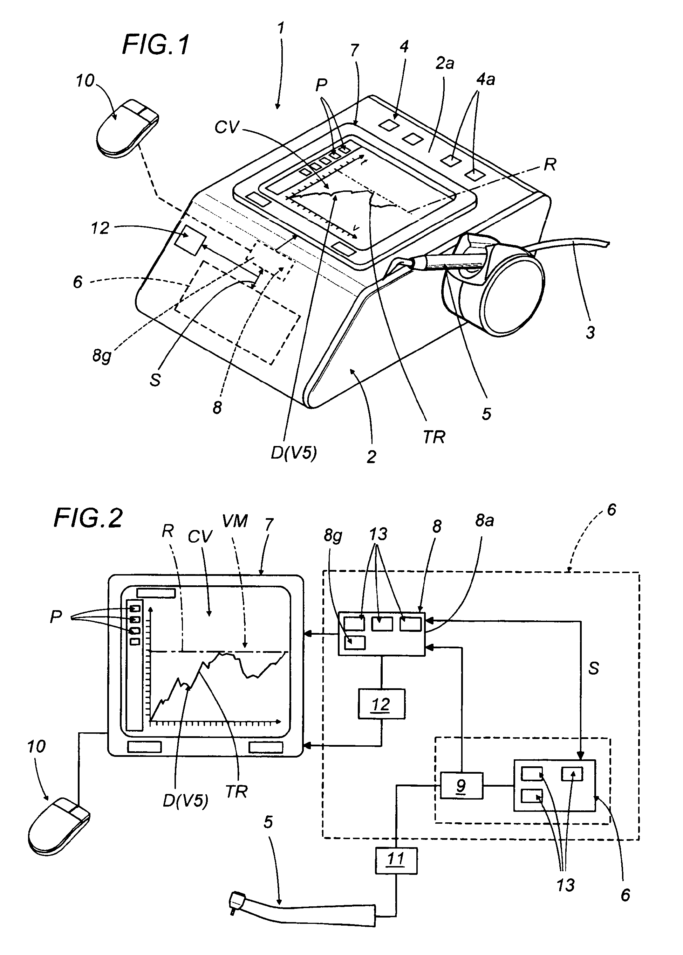

With reference to the accompanying drawings, in particular Figure 1, the auxiliary apparatus for dental treatments according to the invention is labelled 1 in its entirety and comprises, insofar as is relevant to the present invention:
- a main body 2 (for example, shaped substantially like a parallelepiped, but without thereby restricting the scope of the invention) constituting a power unit that drives handpieces 5 used for traditional conservative, implant and/or endodontic operations and in turn connected to the unit 2 through a connecting tube 3 (equipped with an appropriate end fitting);
- means 4 for activating the handpiece 5 and adjusting the operating parameters of the handpiece 5, said means (for example pushbuttons 4a) being located on a surface 2a of the main body 2 and being controlled by
- a microprocessor unit 6 (illustrated as a block in the drawings) for controlling the main and auxiliary functions of the handpiece 5 applied to the unit 2.

Depending on the type of treatment, the handpieces applicable to the apparatus may be of several different kinds, such as, for example, handpiece burs for implant surgery or dental filing tools for endodontic surgery.

Obviously, the apparatus according to the invention may include additional auxiliary components (for example, a bag of physiological saline connected directly to the handpiece and providing a separate fluid supply during treatment) without thereby restricting the scope of the invention.

As shown in Figure 1, the apparatus 1 also comprises:
- a data display screen 7 mounted on the main body 2;
- an interface unit 8 connected, on one side, to the microprocessor 6 and, on the other, to the screen 7 and designed to receive from the microprocessor 6 at least one signal S corresponding to a data item D that is a function of the torque value V5 of the active handpieces 5 and to convert it into at least one graphic viewing field CV on the screen 7 in real time so as display the graph TR of torque over time t corresponding to the use of the selected handpiece 5.

In other words, an apparatus 1 structured in this way can display the torque applied to the active handpiece 5 in real time, that is to say, while the patient is being treated.

The screen 7 preferably, but not necessarily, forms an integral part of the main body 2 and may be built into the surface 2a of the main body 2 itself.

As shown also in Figure 2, the interface unit 8 may be a separate secondary microprocessor unit 8a.

Alternatively, the interface unit 8 may comprise a real-time graphic processing unit 8g.

According to another alternative, the interface unit 8 may be built into the primary microprocessor unit 6.

Figure 2 also shows how the interface unit 8 makes it possible to produce a Cartesian graph showing, on the y-axis, the values V of the aforementioned torque and, on the x-axis, the values of the time t within which the real-time graph TR of the torque value V5 is displayed.

In addition to the above, the viewing field may also, advantageously, present other data related to the torque value displayed in real time.

Thus the microprocessor 6 may support a unit 9 for controlling at least the torque value V5 of the handpiece 5 used. These values are variables forming part of parameters P that depend on the type of application, that is, traditional conservative operations, implants or endodontic operations.

The settings defined by the parameters P of the handpiece 5 working values V5 may be displayed beside the graph in the graphic viewing field CV on the screen 7 according to the applied handpiece 5, for example, in the form of different icons in different colours depending on the type of treatment.

If the interface unit 8 consists of a secondary microprocessor, the parameters P of the operating values are stored in the secondary microprocessor itself and may be selected directly from the graphic viewing field CV using a first peripheral unit 10 (for example, a mouse) connected to the interface unit 8 and designed to communicate both ways with the primary microprocessor 6 in order to make the appropriate selections relating to the handpiece 5.

Similarly, the above mentioned control unit 9 may be equipped with means 11 for limiting the maximum value VM assignable to the torque value V according to the type of operation and type of handpiece 5 used.

The maximum value VM of the torque value V assignable to the selected handpiece 5 may be displayed in the graphic viewing field CV in the form of a straight line R parallel to the x-axis of the graph.

The two-way connection between the interface unit 8 and the primary microprocessor 6 makes it possible to generate the graph TR in the graphic viewing field CV in real time when the handpiece 5 to be used is switched on and, if necessary, keeps the graph TR on screen when the handpiece 5 is switched off so that the graph TR may be continued from the same point when the handpiece 5 is switched on again, thus obtaining an uninterrupted graph TR on the screen 7 throughout the treatment required.

For completing the structure, the interface unit 8 might be connected to a second peripheral unit 12 for issuing an audible signal, activated by the interface unit 8 itself when the torque value V of the handpiece 5 being used approaches the maximum value VM assigned. The peripheral unit 12 may be set to increase or decrease the intensity of the audible signal depending on how close the torque value V5 recorded at that moment is to the maximum value VM set.

In this way, the surgeon can be alerted immediately to the maximum torque applied to the handpiece being used.

For improved performance of the apparatus 1, the interface unit 8 and the microprocessor 6 might be equipped with memory banks 13 enabling the graphs TR plotted on the screen 7 in real time to be stored and thereby permitting the creation of an archive of specific patient treatments.

This storage facility would also enable two or more stored graphs TR to be displayed simultaneously by the interface unit 8 and superimposed in the viewing field CV on the screen 7 so as to compare different types of treatment or different types of tissue.

An apparatus made in this way thus achieves the aforementioned aims thanks to the possibility of administering dental treatments with handpieces of different types whose operation is constantly monitored at least as regards the torque applied to them during operation.

On-screen displaying of torque/time graphs on line gives the surgeon an immediate view of the torque applied to the tool during work.

This information, for example regarding a bur (during implant treatments) or a dental filing tool (during endodontic treatments) is important and useful because it provides an immediate indication of the tooth or bone structure of the part being treated and enables the surgeon to quickly decide how to proceed with the treatment, what diameter or length of tools to use, etc.

All of this is achieved in a full-featured structure allowing extremely rapid display and selection times, with obvious advantages for both the surgeon and the patient.

It will be understood that the invention described may be useful in many industrial applications and may be modified and adapted in several ways without thereby departing from the scope of the claims. Moreover, all the details of the invention may be substituted by technically equivalent elements.

## Claims

1. An auxiliary apparatus for dental treatments, the apparatus (1) comprising at least:
- a main body (2) constituting a power unit that drives handpieces (5) used for traditional conservative, implant and/or endodontic operations and in turn connected to the unit (2) through a connecting tube (3);
- handpiece (5) activation and adjustment means (4) located on a surface (2a) of the main body (2) and being controlled by
- a microprocessor unit (6) for controlling the main and auxiliary functions of the handpiece (5) applied to the unit (2); the apparatus (1)
further **comprising:**
- a data display screen (7) mounted on the main body (2);
- an interface unit (8) connected, on one side, to the microprocessor (6) and, on the other, to the screen (7) and designed to receive from the microprocessor (6) at least one signal (S) corresponding to a data item (D) that is a function of the torque value (V5) of the handpiece (5) being used and to convert this signal into at least one graphic viewing field (CV) on the screen (7) in real time so as to display the graph (TR) of torque over time (t) corresponding to the use of the handpiece (5); the microprocessor (6) supporting a unit (9) for controlling at least the torque value (V5) of the usable handpieces (5), the torque value (V5) being variables forming part of parameters P that depend on the type of application, that is tradifional *conservative* operations, implants *or* endoclantic operations; the parameters (P) of the operating values (V5) of the handpiece (5) **being** displayed in the graphic viewing field (CV) on the screen (7) in accordance with the handpiece (5) used; wherein the interface unit (8) comprises a secondary microprocessor and the parameters (P) of the operating values being stored in said secondary microprocessor and being selected directly from the graphic viewing field (CV) through a peripheral unit (10) connected to the interface unit (8) itself.

2. The apparatus according to claim 1, **characterised in that** the interface unit (8) comprises a separate, secondary microprocessor unit (8a).

3. The apparatus according to claim 1, **characterised in that** the interface unit (8) comprises a real-time graphic processing unit (8g).

4. The apparatus according to claim 1, **characterised in that** the interface unit (8) forms an integral part of the primary microprocessor unit (6).

5. The apparatus according to claim 1, **characterised in that** the interface unit (8) produces a Cartesian graph showing, on the y-axis, the values (V) of torque and, on the x-axis, the values of the time (t) within which the real-time graph (TR) of the torque value (V5) is displayed.

6. The apparatus according to claim 1, **characterised in that** the control unit (9) is equipped with means (11) for limiting the maximum value (VM) assignable to the torque value (V) according to the type of operation and type of handpiece (5), the maximum value (VM) of the value (V) assignable to the handpiece (5) being displayed in the graphic viewing field (CV) in the form of a straight line (R) parallel to the x-axis of the graph.

7. The apparatus according to **claim** 6, **characterised in that** the interface unit (8) comprises a peripheral unit (12) for issuing an audible signal, activated by the interface unit (8) itself when the torque value (V) approaches the maximum value (VM) assigned.

8. The apparatus according to claim 1, **characterised in that** the interface unit (8) and the microprocessor (6) are equipped with memory banks (13) for storing the graphs (TR) plotted on the screen (7) in real time.

9. The apparatus according to claim 8, **characterised in that** the interface unit (8) enables two or more stored graphs (TR) to be displayed simultaneously and superimposed in the viewing field (CV) on the screen (7).

10. The apparatus according to claim 1, **characterised in that** the interface unit (8) is connected to and communicates with the microprocessor (6) in such a way as to generate the graph (TR) in the graphic viewing field (CV) in real time when the handpiece (5) to be used is switched on and to keep the graph (TR) on screen when the handpiece (5) is switched off so that the graph (TR) may be continued from the same point when the handpiece (5) is switched on again, thus obtaining an uninterrupted graph (TR) on the screen (7).

11. The apparatus according to claim 1, **characterised in that** the screen (7) forms an integral part of the main body (2) and is built into the surface (2a) of the main body (2) itself.

## Patentansprüche

1. Zusatzgerät zur zahnärztlichen Behandlung, wobei das Gerät (1) zumindest Folgendes beinhaltet:
- ein Hauptgehäuse (2), das eine Versorgungseinheit zum Antrieb von Handstücken (5) bildet, die für zahnärztliche Behandlungen herkömmlicher konservativer Art, für Implantate und/oder für die endodontische Chirurgie verwendet werden und ihrerseits mit der Einheit (2) über einen Anschlussschlauch (3) verbunden sind;
- Mittel (4) zur Aktivierung und Einstellung der Handstücke (5), die auf einer Fläche (2a) des Hauptgehäuses (2) angeordnet sind und gesteuert werden über
- eine Mikroprozessoreinheit (6) zur Steuerung der Haupt- und Zusatzfunktionen des Handstücks (5), das mit der Einheit (2) verbunden ist;
wobei das Gerät (1) ferner beinhaltet:
- einen Datenanzeige-Bildschirm (7), der am Hauptgehäuse (2) angebracht ist;
- eine Schnittstelleneinheit (8), die auf einer Seite an den Mikroprozessor (6) und auf der anderen Seite an den Bildschirm (7) angeschlossen ist und dafür ausgelegt ist, von dem Mikroprozessor (6) zumindest ein Signal (S) zu empfangen, das einem Datensatz (D) entspricht, der eine Funktion des Drehmomentwertes (V5) des verwendeten Handstückes (5) darstellt, und dieses Signal in Echtzeit in zumindest ein grafisches Anzeigefeld (CV) auf dem Bildschirm (7) umzuwandeln, so dass das Kurvenschaubild (TR) des Drehmoments im Zeitverlauf (t), das der Verwendung des Handstücks (5) entspricht, angezeigt wird; wobei der Mikroprozessor (6) eine Einheit (9) zur Steuerung zumindest des Drehmomentwertes (V5) der verwendbaren Handstücke (5) unterstützt, wobei die Drehmomentwerte (V5) Variablen innerhalb von Parametern (P) darstellen, die jeweils von der Anwendungsart abhängen, das heißt herkömmliche konservative Behandlungen, Implantate oder endodontische Chirurgie; wobei die Parameter (P) der Betriebswerte (V5) des Handstückes (5) in dem grafischen Anzeigefeld (CV) auf dem Bildschirm (7) entsprechend des verwendeten Handstücks (5) angezeigt werden; worin die Schnittstelleneinheit (8) einen sekundären Mikroprozessor beinhaltet und die Parameter (P) der Betriebswerte in dem genannten sekundären Mikroprozessor gespeichert sind und direkt vom grafischen Anzeigefeld (CV) aus über eine periphere Einheit (10) gewählt werden, die an die Schnittstelleneinheit (8) angeschlossen ist.

2. Gerät nach Anspruch 1, **dadurch gekennzeichnet, dass** die Schnittstelleneinheit (8) eine separate, sekundäre Mikroprozessoreinheit (8a) beinhaltet.

3. Gerät nach Anspruch 1, **dadurch gekennzeichnet, dass** die Schnittstelleneinheit (8) eine in Echtzeit arbeitende grafische Verarbeitungseinheit (8g) beinhaltet.

4. Gerät nach Anspruch 1, **dadurch gekennzeichnet, dass** die Schnittstelleneinheit (8) einen ergänzenden Bestandteil der primären Mikroprozessoreinheit (6) bildet.

5. Gerät nach Anspruch 1, **dadurch gekennzeichnet, dass** die Schnittstelleneinheit (8) ein kartesisches Kurvenschaubild erzeugt, das auf der y-Achse die Werte (V) für das Drehmoment und auf der x-Achse die Werte für die Zeit (t) anzeigt, worin die Echtzeitkurve (TR) des Drehmomentwertes (V5) angezeigt wird.

6. Gerät nach Anspruch 1, **dadurch gekennzeichnet, dass** die Steuereinheit (9) mit Mitteln (11) zur Begrenzung des zulässigen Höchstwertes (VM) für den Drehmomentwert (V) in Abhängigkeit von der Art der Behandlung und der Art des Handstückes (5) ausgestattet ist; wobei der Höchstwert (VM) für den zulässigen Wert (V) des jeweiligen Handstücks (5) im grafischen Anzeigefeld (CV) in Form einer geraden Linie (R) angezeigt wird, die parallel zu der x-Achse des Kurvenschaubildes verläuft.

7. Gerät nach Anspruch 6, **dadurch gekennzeichnet, dass** die Schnittstelleneinheit (8) eine periphere Einheit (12) zur Ausgabe eines hörbaren Signals beinhaltet, das von der Schnittstelleneinheit (8) ausgelöst wird, wenn der Drehmomentwert (V) sich dem zulässigen Höchstwert (VM) nähert.

8. Gerät nach Anspruch 1, **dadurch gekennzeichnet, dass** die Schnittstelleneinheit (8) und der Mikroprozessor (6) mit Speicherbänken (13) ausgestattet sind, die zur Speicherung der Kurvenschaubilder (TR) dienen, die auf dem Bildschirm (7) in Echtzeit aufgezeichnet werden.

9. Gerät nach Anspruch 8, **dadurch gekennzeichnet, dass** die Schnittstelleneinheit (8) es ermöglicht, dass zwei oder mehr gespeicherte Kurvenschaubilder (TR) gleichzeitig und einander überlagert im Anzeigefeld (CV) auf dem Bildschirm (7) angezeigt werden.

10. Gerät nach Anspruch 1, **dadurch gekennzeichnet, dass** die Schnittstelleneinheit (8) derart mit dem Mikroprozessor (6) verbunden ist und mit diesem kommuniziert, dass das Kurvenschaubild (TR) im grafischen Anzeigefeld (CV) in Echtzeit erzeugt wird, wenn das zu verwendende Handstück (5) eingeschaltet wird, und dass das Kurvenschaubild (TR) am Bildschirm erhalten bleibt, wenn das Handstück (5) ausgeschaltet wird, so dass das Kurvenschaubild (TR) beim erneuten Einschalten des Handstücks (5) am selben Punkt fortgesetzt werden kann, um ein unterbrechungsfreies Kurvenschaubild (TR) auf dem Bildschirm (7) zu erhalten.

11. Gerät nach Anspruch 1, **dadurch gekennzeichnet, dass** der Bildschirm (7) einen ergänzenden Bestandteil des Hauptgehäuses (2) bildet und in die Fläche (2a) des Hauptgehäuses (2) eingebaut ist.

## Revendications

1. Un appareil auxiliaire pour traitements dentaires, tel appareil (1) comprenant au moins :
- un corps principal (2) constituant une unité d'alimentation qui entraîne des pièces à main (5) utilisées pour des opérations conservatrices traditionnelles, des implants et/ou des opérations endodontiques et reliées, tour à tour, à l'unité (2) par l'intermédiaire d'un cordon (3) de branchement ;
- des moyens (4) d'activation et de réglage de la pièce à main (5), situés sur une surface (2a) du corps principal (2) et asservis à
- une unité à microprocesseur (6) servant à commander les fonctions principales et auxiliaires de la pièce à main (5) appliquée à l'unité (2) ; l'appareil (1) comprenant en outre :
- un écran (7) d'affichage de données, monté sur le corps principal (2) ;
- une unité d'interface (8) reliée, d'un côté, au microprocesseur (6) et, de l'autre, à l'écran (7) et destinée à recevoir en provenance dudit microprocesseur (6) au moins un signal (S) correspondant à une donnée (D) qui est fonction de la valeur de couple (V5) de la pièce à main (5) en cours d'utilisation et à convertir ce signal dans au moins un champ de visualisation graphique (CV) sur l'écran (7), en temps réel, de manière à afficher le graphique (TR) du couple par rapport au temps (t) correspondant à l'utilisation de la pièce à main (5) ; le microprocesseur (6) supportant une unité (9) pour contrôler au moins la valeur de couple (V5) des pièces à main (5) utilisables, la valeur de couple (V5) correspondant à des variables faisant partie de paramètres (P) qui dépendent du type d'application, c'est-à-dire, opérations conservatrices traditionnelles, implants ou opérations endodontiques ; les paramètres (P) des valeurs opérationnelles (V5) de la pièce à main (5) étant affichés dans le champ de visualisation graphique (CV) à l'écran (7) en fonction de la pièce à main (5) utilisée, **caractérisé en ce que** l'unité d'interface (8) comprend un microprocesseur secondaire et les paramètres (P) des valeurs opérationnelles sont mémorisés dans ledit microprocesseur secondaire et sont directement sélectionnés à partir du champ de visualisation graphique (CV) par l'intermédiaire d'une unité périphérique (10) reliée à l'unité d'interface (8) elle-même.

2. L'appareil selon la revendication 1, **caractérisé en ce que** l'unité d'interface (8) comprend une unité à microprocesseur secondaire (8a) séparée.

3. L'appareil selon la revendication 1, **caractérisé en ce que** l'unité d'interface (8) comprend une unité (8g) de traitement graphique en temps réel.

4. L'appareil selon la revendication 1, **caractérisé en ce que** l'unité d'interface (8) fait partie intégrante de l'unité à microprocesseur principale (6).

5. L'appareil selon la revendication 1, **caractérisé en ce que** l'unité d'interface (8) génère un graphique cartésien indiquant, sur l'axe des ordonnées, les valeurs (V) de couple et, sur l'axe des abscisses, les valeurs de temps (t) dans les limites desquelles le graphique en temps réel (TR) de la valeur de couple (V5) est affiché.

6. L'appareil selon la revendication 1, **caractérisé en ce que** l'unité de contrôle (9) est dotée de moyens (11) servant à limiter la valeur maximum (VM) pouvant être affectée à la valeur de couple (V) en fonction du type d'opération et du type de pièce à main (5), la valeur maximum (VM) de la valeur (V) pouvant être affectée à la pièce à main (5) étant affichée dans le champ de visualisation graphique (CV) sous la forme d'une droite (R) parallèle à l'axe des abscisses du graphique.

7. L'appareil selon la revendication 6, **caractérisé en ce que** l'unité d'interface (8) comprend une unité périphérique (12) d'émission d'un signal audible, activée par l'unité d'interface (8) elle-même quand la valeur de couple (V) se rapproche de la valeur maximum (VM) affectée.

8. L'appareil selon la revendication 1, **caractérisé en ce que** l'unité d'interface (8) et le microprocesseur (6) sont dotés de banques de mémoire (13) servant à mémoriser les graphiques (TR) tracés sur l'écran (7) en temps réel.

9. L'appareil selon la revendication 8, **caractérisé en ce que** l'unité d'interface (8) permet d'afficher simultanément et de superposer dans le champ de visualisation (CV) de l'écran (7) deux, ou plus, graphiques (TR) mémorisés.

10. L'appareil selon la revendication 1, **caractérisé en ce que** l'unité d'interface (8) est reliée à et communique avec le microprocesseur (6) de manière à générer le graphique (TR) dans le champ de visualisation graphique (CV) en temps réel quand la pièce à main (5) à utiliser est activée et à maintenir le graphique (TR) à l'écran quand cette même pièce à main (5) est désactivée de manière à ce que le graphique (TR) puisse reprendre à partir du même point quand la pièce à main (5) est réactivée, obtenant ainsi un graphique (TR) ininterrompu sur l'écran (7) .

11. L'appareil selon la revendication 1, **caractérisé en ce que** l'écran (7) fait partie intégrante du corps principal (2) et est incorporé dans la surface (2a) du corps principal (2) lui-même.
